# DEMANDE DE BREVET EUROPEEN

(11) **EP 1 138 545 A1**
(43) Date de publication de la demande: **04.10.2001**
(21) Numéro de dépôt: 01400822.1
(22) Date de dépôt: 30.03.2001
(51) Int. Cl.: B60K 41/02

(54) **Groupe motopropulseur de véhicule automobile comportant des moyens de maintien en pente**

(30) Priorité: 30.03.2000 FR 0004025
(71) Demandeur: Renault, 92100 Boulogne Billancourt (FR)
(72) Inventeur: Plante, Francois, 78320 Levis Saint Nom (FR)

(57) **Abrégé**

L'invention propose un groupe motopropulseur (10) de véhicule automobile qui comporte un moteur (12), un embrayage (14), et une transmission (16) entraînant des roues (18), le moteur (12) étant commandé par une unité électronique (22), la transmission (16) étant commandée par une unité électronique (30), au moins suivant au moins un mode de roulage en réponse à au moins une information de couple (C_{M24}) du conducteur, une information de position (P₃₂) d'une pédale de frein (32), et une information (P₃₄) de la position d'un organe (34) de sélection des rapports, caractérisé en ce que l'unité (30) de contrôle peut établir un mode de maintien en pente dans lequel elle émet au moins une consigne (C_{M30}) de couple à l'intention de l'unité électronique (22) et dans lequel elle émet une consigne (C_{E30}) de commande de l'embrayage (14) pour maintenir le véhicule immobile sur la chaussée sans que ses freins ne soient sollicités.

## Description

L'invention concerne un groupe motopropulseur de véhicule automobile.

L'invention concerne plus particulièrement un groupe motopropulseur de véhicule automobile qui comporte au moins, d'amont en aval, un moteur thermique ou électrique commandé, un convertisseur de couple, un embrayage commandé et une transmission commandée qui est susceptible d'établir au moins un rapport de démultiplication pour transmettre un couple moteur à des roues du véhicule, du type dans lequel le moteur est commandé par l'intermédiaire d'une unité électronique de contrôle du moteur, du type dans lequel la transmission est commandée par l'intermédiaire d'une unité électronique de contrôle de la transmission, et du type dans lequel les unités électroniques de contrôle du moteur et de contrôle de la transmission sont susceptibles d'échanger entre elles des informations et des consignes pour assurer le fonctionnement du groupe motopropulseur suivant au moins un mode de roulage en réponse à au moins une information de couple demandé par le conducteur correspondant à une position associée d'une pédale d'accélérateur, en réponse à une information représentative de la position d'une pédale de frein, et en réponse à une information représentative de la position d'un organe de sélection des rapports de transmission du véhicule.

On connaît de nombreux exemples de groupes motopropulseurs de ce type.

Les véhicules automobiles équipés de transmissions commandées et d'embrayages commandés sont généralement susceptibles de fonctionner suivant un mode de roulage au cours duquel, dans des conditions déterminées d'arrêt correspondant par exemple à un arrêt momentané, un dispositif de débrayage à l'arrêt permet, pendant un court instant, d'immobiliser le véhicule avec un rapport de transmission engagé, les freins serrés, et l'embrayage débrayé.

Un tel dispositif de débrayage à l'arrêt souffre, lorsque la stratégie de débrayage à l'arrêt est activée et qu'il est décidé de sortir du mode de débrayage à l'arrêt alors que le véhicule est situé dans une pente, d'un temps de réponse à la prise de couple qui est dû à la dynamique de montée de la force de pression exercée sur les éléments de friction du récepteur qui est agencé en série entre le moteur et la transmission, c'est à dire par exemple de l'embrayage.

Pendant ce temps de réponse, si le conducteur n'enfonce pas suffisamment l'accélérateur, le couple transmis jusqu'aux roues du véhicule n'est alors pas capable de compenser le couple d'entraînement du véhicule dû à la force de gravité qui s'exerce sur celui-ci. Il s'ensuit que le véhicule recule de lui-même, d'une valeur d'autant plus importante que la pente est grande, ce qui représente un danger potentiel de collision avec un obstacle situé derrière le véhicule.

Ce danger est d'autant plus important que le déplacement a lieu dans une direction opposée au sens naturel de la marche du véhicule, et qu'une des conditions habituelles de sortie du débrayage à l'arrêt est généralement que les freins du véhicule sont désactivés.

Pour remédier à cet inconvénient, on a proposé, selon une première conception connue, d'utiliser un capteur de déplacement, dont l'information fournie permet de déclencher une stratégie visant à accélérer la montée de la pression exercée sur les éléments de friction du récepteur qui transmet le couple moteur à la transmission. Cette conception a pour inconvénient de nécessiter un capteur relativement onéreux, soit à cause du principe de mesure employé et des contraintes de câblage qui peuvent en découler (par exemple, un capteur à effet "Hall", lié à six fils électriques), ou d'améliorer un capteur de vitesse du véhicule déjà existant, ou bien de nécessiter la présence d'un autre système que le groupe moto-propulseur qui soit capable de fournir une information équivalente.

De plus, cette conception n'élimine pas tout risque de recul, du fait des durées nécessaires à l'acquisition de l'information, et à son traitement pour action. Par ailleurs, si on règle pour une pente donnée la vitesse de montée en pression appliquée au récepteur en série au sens de la transmission de couple, puisqu'il n'est pas possible de prédire la pente dans laquelle se situera le véhicule, le comportement, en dehors de cette valeur précise de pente, ne sera pas satisfaisant. Par exemple, si la pente est plus faible, la transmission du couple sera alors brusque, conduisant à un à-coup ressenti par les occupants du véhicule, ce qui dégradera la prestation de débrayage à l'arrêt.

Une deuxième conception connue consiste à mettre en prise un récepteur de la transmission automatisée différent de celui qui est normalement en prise dans le rapport engagé considéré. Un tel récepteur a pour effet de bloquer la transmission en empêchant tout déplacement. Cette solution présente l'inconvénient de rendre très délicate la synchronisation des pilotages des pressions s'exerçant sur les différents récepteurs en prise, alors que les objectifs de gestion de la pression respective exercée peuvent être opposés. Un récepteur peut en effet être commandé suivant une augmentation de la pression alors que l'autre est commandé suivant une diminution de la pression.

De plus, la multiplication des récepteurs en prise multiplie les éléments dont le comportement en matière de transmission de couple est non linéaire. Pour les transmissions à baladeurs et synchroniseurs, cette deuxième famille de solutions n'est pas envisageable du fait même de leur architecture.

Pour remédier à ces inconvénients, l'invention propose un groupe moto-propulseur du type décrit précédemment qui permet d'immobiliser le véhicule en commandant le patinage de l'embrayage et en commandant le moteur du véhicule selon un couple déterminé.

Dans ce but, l'invention propose un groupe moto-propulseur du type décrit précédemment caractérisé en ce que l'unité de contrôle de la transmission est susceptible, en fonction de paramètres déterminés de fonctionnement du véhicule correspondant notamment à une configuration selon laquelle le véhicule évolue sur une chaussée en pente et quitte l'arrêt, d'établir un mode de maintien en pente dans lequel elle émet au moins une consigne de couple à l'intention de l'unité électronique de contrôle du moteur pour maintenir le véhicule immobile sur la chaussée sans que ses freins ne soient sollicités.

Selon d'autres caractéristiques de l'invention :
- l'unité de contrôle de la transmission comporte un premier module comportant un algorithme de calcul qui est susceptible d'établir une consigne de couple à l'intention de l'unité de contrôle du moteur, et un second module de test qui est destiné à activer ou inactiver le lancement de l'algorithme du premier module et/ou l'exécution d'une consigne de couple calculée par cet algorithme ;
- le second module de test comporte au moins un premier sous-module de test initial en mode de fin de débrayage à l'arrêt, et un deuxième sous-module de test initial hors mode de fin de débrayage à l'arrêt qui sont susceptibles, indépendamment l'un de l'autre ou en combinaison, d'activer l'algorithme de calcul du premier module si des conditions déterminées sont remplies, ou bien de déclencher un retour de l'unité de contrôle de la transmission à son état initial si les conditions déterminées ne sont pas remplies ;
- le premier sous-module de test initial est susceptible d'activer le lancement de l'algorithme de calcul du premier module lorsque des premières conditions de fin de débrayage à l'arrêt sont vérifiées, notamment lorsque l'information représentative de la position d'une pédale de frein correspond au relâchement des freins ;
- le deuxième sous-module de test initial est susceptible d'activer le lancement de l'algorithme de calcul du premier module lorsque des deuxièmes conditions sont vérifiées simultanément, notamment lorsque :
   . l'information représentative de la position de l'organe de sélection des rapports de transmission du véhicule correspond à des positions autres que des positions neutre ou de parking,
   . l'information représentative de la position d'une pédale de frein correspond à un relâchement de la pédale,
   . une information représentative de la vitesse du véhicule est inférieure à une première vitesse de seuil déterminée ;
- le second module de test comporte au moins un troisième sous-module de test courant qui est susceptible de désactiver l'exécution de la consigne de couple calculée par l'algorithme de calcul du premier module, puis de déclencher le retour de Funité de contrôle de la transmission retourner son état initial ;
- le troisième sous-module de test est susceptible, à l'issue de l'exécution du calcul par l'algorithme, d'inhiber l'exécution de la consigne de couple calculée par l'algorithme de calcul du premier module lorsqu'au moins une parmi des troisièmes conditions d'inhibition est vérifiée, notamment lorsque :
   . l'information de couple demandée par le conducteur est au moins égale à la consigne de couple calculée par l'algorithme de calcul, ou
   . l'information représentative de la vitesse du véhicule est au moins égale à une deuxième vitesse de seuil déterminée, ou
   . l'information représentative de la position d'une pédale de frein correspond à un actionnement de la pédale ;
- l'algorithme de calcul comporte une séquence de calcul par rangs successifs dans laquelle, à partir d'une valeur initiale calibrée de la consigne de couple associée à un premier rang, sont effectuées successivement :
   . la transmission de la consigne de couple à l'unité de contrôle du moteur, puis sa demande d'exécution,
   . l'incrémentation d'une unité du rang,
   . le calcul récurrent d'une nouvelle valeur de la consigne de couple associée au rang courant, déterminée en retranchant à la valeur de la consigne de couple associée au rang précédent une valeur de couple d'inertie égale au produit d'un moment d'inertie du moteur, de la dérivée d'un régime de rotation du moteur entre le rang courant et le rang précédent, et d'un gain déterminé ;
- le gain déterminé est adapté aux caractéristiques du groupe moto-propulseur du véhicule pour lequel l'algorithme de calcul s'applique ;
- à l'issue du calcul de la nouvelle consigne de couple courant, le premier module de calcul appelle le troisième sous-module de test courant et, si aucune des troisièmes conditions d'inhibition n'est vérifiée, le troisième sous-module de test courant n'inhibe pas l'exécution de la consigne de couple et compare la valeur du rang courant à un rang d'exécution déterminé, puis :
   . si le rang courant est inférieur au rang d'exécution déterminé, le premier module de calcul est amené à un état en amont de la transmission de la consigne de couple à l'unité de contrôle du moteur,
   . si le rang courant est supérieur ou égal au rang d'exécution déterminé, le premier module de calcul le compare à nouveau à un rang déterminé de suspension de calcul, puis :
      - si le rang courant est inférieur au rang de suspension déterminé, le premier module de calcul est amené à un état en aval de la transmission de la consigne de couple à l'unité de contrôle du moteur et en amont de l'incrémentation d'une unité du rang,
      - si le rang courant est supérieur au rang de suspension déterminé, il est à nouveau initialisé à la valeur du premier rang et le premier module de calcul est amené à un état en amont de la transmission de la consigne de couple à l'unité de contrôle du moteur ;
- l'unité de contrôle du moteur comporte un dispositif d'arbitrage entre l'information de couple demandé par le conducteur et la consigne de couple émise par l'unité de contrôle de la transmission ;
- l'unité de contrôle du moteur et l'unité de contrôle de la transmission font partie d'une même unité de contrôle du groupe motopropulseur.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de principe d'un groupe moto-propulseur selon l'invention,
- la figure 2 est un organigramme descriptif du fonctionnement de l'unité électronique de contrôle de la transmission.

Dans la description qui va suivre, des chiffres de référence identiques désignent des pièces identiques ou ayant des fonctions similaires.

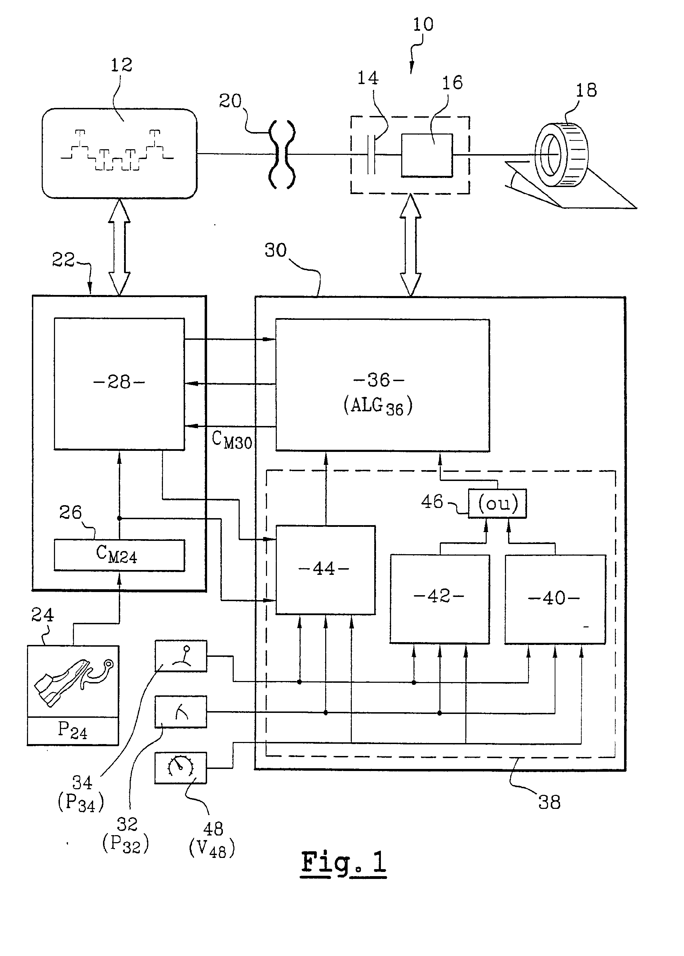

On a représenté à la figure 1 l'ensemble d'un groupe motopropulseur 10 selon l'invention.

De manière connue, un tel groupe motopropulseur 10 comporte au moins, d'amont en aval, un moteur thermique ou électrique commandé 12, un convertisseur de couple 20, un embrayage commandé 14, et une transmission commandée 16 qui est susceptible d'établir au moins un rapport de démultiplication pour transmettre un couple moteur à des roues 18 du véhicule. Dans le mode de réalisation préféré de l'invention, le convertisseur de couple 20 est un convertisseur hydraulique de couple et la transmission 16 est une transmission automatique.

Le moteur 12 est commandé par l'intermédiaire d'une unité 22 électronique de contrôle du moteur.

L'unité 22 électronique de contrôle du moteur est notamment susceptible de convertir une information P₂₄ de la position d'une pédale d'accélérateur 24 en une information de couple C_{M24} demandé par le conducteur par l'intermédiaire d'un dispositif 26 de conversion.

L'unité 22 électronique de contrôle du moteur comporte aussi un dispositif d'arbitrage 28 qui est susceptible de comparer l'information de couple C_{M24} demandé par le conducteur à d'autres informations de demande de couple en provenance d'autres systèmes du véhicule.

La transmission 16 et l'embrayage 14 sont commandés par l'intermédiaire d'une unité électronique 30 de contrôle de la transmission.

De manière connue, l'unité électronique 22 de contrôle du moteur et l'unité électronique 30 de contrôle de la transmission sont susceptibles d'échanger entre elles des informations et des consignes pour assurer le fonctionnement du groupe 10 motopropulseur suivant au moins un mode de roulage en réponse à l'information de couple C_{M24} demandé issue de la conversion de la position P₂₄ de la pédale d'accélérateur 24, en réponse à une information représentative de la position P₃₂ d'une pédale de frein 32, et en réponse à une information représentative de la position P₃₄ d'un organe 34 de sélection des rapports de transmission du véhicule.

En particulier, le dispositif d'arbitrage 28 est susceptible de comparer l'information de couple C_{M24} demandé par le conducteur et une information de demande de couple C_{M30} émise par l'unité 30 de contrôle de la transmission pour commander le moteur 12.

Conformément à l'invention, l'unité 30 de contrôle de la transmission est susceptible, en fonction de paramètres déterminés de fonctionnement du véhicule correspondant notamment à une configuration selon laquelle le véhicule évolue sur une chaussée en pente et quitte l'arrêt, d'établir un mode de maintien en pente dans lequel elle émet au moins une consigne de couple C_{M30} à l'intention de l'unité 22 électronique de contrôle du moteur pour maintenir le véhicule immobile sur la chaussée, sans que ses freins (non représentés) ne soient sollicités, l'embrayage 14 étant embrayé et le convertisseur de couple assurant la régulation du couple vers la transmission 16.

A cet effet, l'unité 30 de contrôle de la transmission comporte un premier module 36 comportant un algorithme "ALG₃₆" de calcul qui est susceptible d'établir la consigne de couple C_{M30} à l'intention de l'unité 22 de contrôle du moteur, et un second module 38 de test qui est destiné à activer ou inactiver le lancement de l'algorithme "ALG₃₆" du premier module 36 et/ou l'exécution de la consigne de couple C_{M30} calculée par cet algorithme "ALG₃₆".

Plus précisément, le second module 38 de test comporte au moins un premier sous-module 40 de test initial "T₄₀" en mode de fin de débrayage à l'arrêt, et un deuxième sous-module 42 de test initial "T₄₂" hors mode de fin de débrayage à l'arrêt qui sont susceptibles, indépendamment l'un de l'autre ou en combinaison, d'activer l'algorithme "ALG₃₆" de calcul du premier module 36 si des conditions déterminées sont remplies, ou bien de déclencher un retour de l'unité 30 de contrôle de la transmission à son état initial si les conditions déterminées ne sont pas remplies.

La possibilité selon laquelle le premier sous-module 40 de test initial "T₄₀" et le deuxième sous-module 42 de test initial "T₄₂" qui sont susceptibles, indépendamment l'un de l'autre ou en combinaison, d'activer l'algorithme "ALG₃₆" est représentée par un opérateur logique 46 de type "OU", qui a été représenté à la figure 1 interposé entre les sous-modules 40, 42 et le premier module 36.

Le second module 38 de test comporte aussi au moins un troisième sous-module 44 de test courant qui est susceptible de désactiver l'exécution de la consigne de couple C_{M30} calculée par l'algorithme de calcul du premier module 36, puis de déclencher le retour de l'unité de contrôle 30 de la transmission à son état initial.

Tous les sous-modules 40, 42, et 44 du second module 38 de test fonctionnent en réponse à l'information P₃₄ représentative de la position de l'organe 34 de sélection des rapports de transmission du véhicule, à l'information P₃₂ représentative de la position de la pédale de frein 32, et à une information V₄₈ fournie par un capteur de vitesse 48 du véhicule.

Ainsi, l'information P₃₄ représentative de la position de l'organe 34 de sélection des rapports de transmission du véhicule est susceptible de prendre au moins des valeurs "Parking", "Reverse", "Neutral", ou "Drive", respectivement selon que l'organe 34 est placé par le conducteur dans des positions associées à un mode de parquage du véhicule, un mode de fonctionnement en marche arrière, un mode neutre, et un mode de fonctionnement de marche avant.

Par ailleurs, l'information P₃₂ représentative de la position de la pédale de frein 32 est susceptible de prendre une valeur unitaire "1" lorsque les freins sont actifs ou de prendre la valeur nulle "0" lorsque les freins sont relâchés.

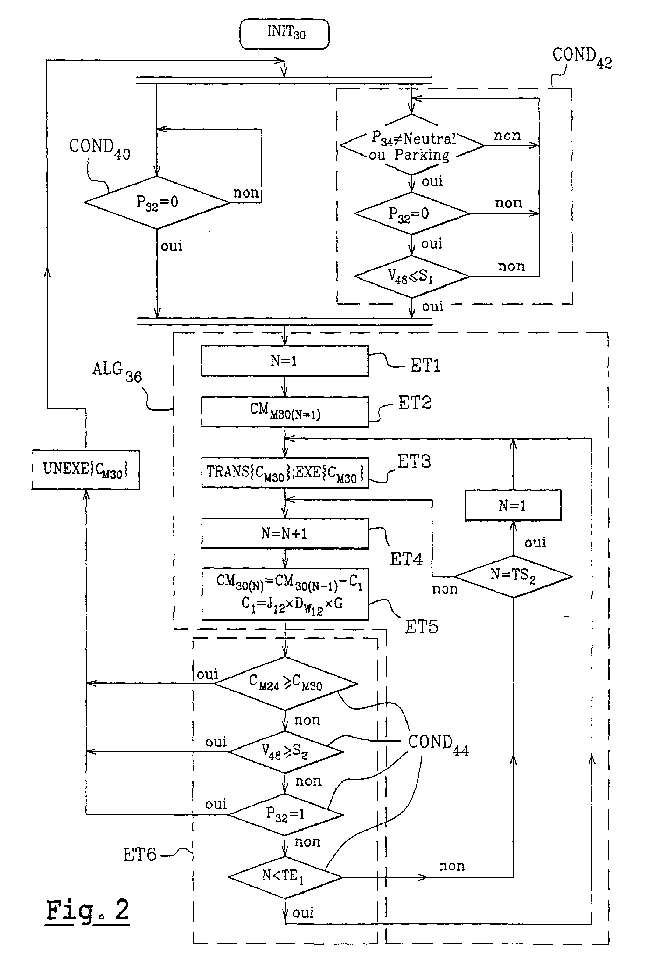

Le fonctionnement du second module de test est maintenant décrit en référence à la figure 2.

Conformément à l'invention, à partir d'un état initial "INIT₃₀" de l'unité 30 de contrôle de la transmission, le premier sous-module 40 de test initial et le second sous-module de test 42 sont susceptibles d'activer le lancement de l'algorithme ALG36 de calcul du premier module 36 lorsque des premières conditions COND₄₀ caractérisant le mode de fin de débrayage à l'arrêt et/ou lorsque des deuxièmes conditions COND₄₂ caractérisant un autre mode, différent du mode de fin de débrayage à l'arrêt sont vérifiées respectivement.

En particulier, une première conditions COND₄₀ peut être vérifiées, à titre d'exemple et de façon non limitative de l'invention, lorsque l'information P₃₂ prend la valeur "0", ce qui signifie que les freins sont relâchés.

Si les conditions COND₄₀ ne sont pas vérifiées, le premier sous-module déclenche un retour de l'unité de contrôle de la transmission à son état initial "INIT₃₀".

Le deuxième sous-module de test initial est susceptible d'activer le lancement l'algorithme de calcul du premier module lorsque les deuxièmes conditions COND₄₂ sont vérifiées simultanément, notamment lorsque :
- l'information P₃₄ représentative de la position de l'organe 34 de sélection des rapports de transmission du véhicule correspond à des positions autres que les positions neutre ou de parking, c'est à dire qu'elle ne prend ni la valeur "N" ni la valeur "P"
- l'information P₃₂ représentative de la position de la pédale de frein 32 correspond à un relâchement de la pédale, c'est à dire qu'elle prend la valeur "0".
- l'information V₄₈ représentative de la vitesse du véhicule est inférieure à une première vitesse de seuil S₁ déterminée.

Si au moins l'une ou l'autre des conditions COND₄₀ ou COND₄₂ est vérifiée, le second module 38 active l'algorithme de calcul ALG₃₆.

Conformément à l'invention, l'algorithme de calcul ALG₃₆ comporte une séquence de calcul par rangs N successifs. En partant d'une première étape ET1 au cours de laquelle la valeur du rang N est rendue égale à l'unité, puis d'une deuxième étape ET2 au cours de laquelle la consigne de couple C_{M30} est rendue égale à une valeur initiale C_{M30(1)} calibrée de la consigne de couple associée au premier rang, sont effectuées successivement :
- une troisième étape ET3 au cours de laquelle est effectuée la transmission TRANS{C_{M30}} de la consigne de couple C_{M30} à l'unité de contrôle du moteur 22, puis sa demande d'exécution EXE{C_{M30}},
- une quatrième étape ET4 au cours de laquelle est effectuée l'incrémentation d'une unité du rang N, et
- une cinquième étape ET5 au cours de laquelle est effectué le calcul récurrent d'une nouvelle valeur de la consigne de couple C_{M30(N)} associée au rang courant N, déterminée en retranchant à la valeur de la consigne de couple associée au rang précédent C_{M30(N-1)} une valeur de couple d'inertie C_{I} égale au produit d'un moment d'inertie J₁₂ du moteur 12, de la dérivée D_{ω12} d'un régime de rotation ω12 du moteur 12 entre le rang courant N et le rang précédent N-1, et d'un gain G déterminé.

Avantageusement, le gain G déterminé est réglable et adapté aux caractéristiques du groupe moto-propulseur 10 du véhicule pour lequel l'algorithme ALG₃₆ de calcul s'applique. A titre d'exemple et de façon non limitative de l'invention, il prend en compte des facteurs aussi divers que la masse du véhicule, les rapports de démultiplication de la transmission 16, les caractéristiques du convertisseur 20, ou encore les réglages effectués sur le moteur 12.

Puis au cours d'une étape ET6, suivant l'étape ET5 de calcul de la nouvelle consigne C_{M30} de couple courant, le premier module 36 de calcul appelle, le troisième sous-module 44 de test courant.

Le troisième sous-module 44 de test est susceptible, à l'issue de l'exécution du calcul de la consigne C_{M30} par l'algorithme ALG₃₆, d'inhiber l'exécution de la consigne C_{M30} de couple calculée par l'algorithme de calcul du premier module lorsqu'au moins une parmi des troisièmes conditions d'inhibition COND₄₄ est vérifiée, notamment lorsque :
- l'information de couple C_{M24} demandée par le conducteur est au moins égale à la consigne de couple C_{M30} calculée par l'algorithme de calcul ALG₃₆,
- l'information V₄₈ représentative de la vitesse du véhicule est au moins égale à une deuxième vitesse S2 de seuil déterminée, ou
- l'information P₃₂ représentative de la position de la pédale de frein 32 prend la valeur "1", ce qui correspond à actionnement de la pédale 32.

L'inhibition de l'exécution de la consigne C_{M30} se traduit par une instruction UNEXE{C_{M30}} qui est envoyée à l'unité 22 de commande du moteur.

En effet, lorsque le véhicule étant en pente et est donc soumis à l'action de la gravité, si le conducteur veut avancer, il enfonce la pédale d'accélérateur 24, dont la position P₂₄ est interprétée en demande de couple C_{M24}. Tant que ce couple C_{M24} correspondant ne dépasse pas la valeur de la consigne de couple C_{M30}, le véhicule reste immobile, l'embrayage 14 étant embrayé et le convertisseur 20 hydraulique assurant la régulation du couple pour maintenir la transmission 16 immobile.

Si le couple C_{M24} dépasse la valeur de la consigne C_{M30}, le troisième sous-module inhibe l'exécution du couple C_{M30} en émettant la consigne UNEXE{C_{M30}}. L'algorithme ALG₃₆ est interrompu, ce jusqu'à ce que les conditions COND₄₀ et COND₄₄ soient de nouveau vérifiées.

Dans le cas d'une pente réduite, la valeur initiale C_{M30(n=1)} de la consigne de couple étant trop importante, l'algorithme ALG₃₆ converge plus rapidement vers une valeur du couple C_{M24} demandé qui est associée à un régime ω12 de ralenti du moteur 12, et ceci du fait des grandes variations du régime ω12 du moteur 12 qui sont provoquées par les premiers instants de calcul de l'algorithme ALG₃₆. Cette valeur de couple C_{M24} demandé correspond à la position de repos de la position P₂₄ de la pédale d'accélérateur.

Dès que le régime moteur ω12 se rapproche de cette valeur de ralenti, le couple moteur C_{M24} demandé vient à être supérieur ou égal à la valeur de la consigne C_{M30} de couple envoyée par l'unité de contrôle de la transmission 30, qui a convergé très vite vers une valeur inférieure à celle du couple moteur C_{M24} du fait de l'importance de la valeur initiale C_{M30(n=1)} de la consigne de couple. Dans ce cas, le troisième sous-module inhibe l'exécution du couple C_{M30} en émettant la consigne UNEXE{C_{M30}}. L'algorithme ALG₃₆ est interrompu jusqu'à ce que les conditions COND₄₀ et COND₄₄ soient de nouveau vérifiées. Le couple C_{M24} de ralenti correspondant à la position de repos de la pédale 24 suffit à entraîner le véhicule vers l'avant.

Par ailleurs, dès que l'information P₃₂ représentative de la position de la pédale de frein 32 correspond à une sollicitation de la pédale 32, c'est à dire qu'elle prend la valeur "1", ou que l'information V₄₈ représentative de la vitesse du véhicule est supérieure ou égale à la deuxième vitesse de seuil S₂ déterminée, le troisième sous-module inhibe l'exécution du couple C_{M30} en émettant la consigne UNEXE{C_{M30}} et l'algorithme ALG₃₆ est interrompu jusqu'à ce que les conditions COND₄₀ et COND₄₄ soient de nouveau vérifiées.

Dans le cas ou aucune de ces condition n'est vérifiée, le troisième sous-module 44 de test courant n'inhibe pas l'exécution de la consigne C_{M30} de couple.

A mesure que l'algorithme effectue plusieurs boucles successives, il finit par converger vers une valeur C_{M30} qui n'entraîne plus de variation importante du régime du moteur 12. Ce couple C_{M30} correspond au couple C_{M30} qui est nécessaire pour garantir l'équilibre du véhicule si celui-ci se trouve dans une pente.

Par ailleurs, l'algorithme ALG₃₆ comporte une temporisation qui limite dans le temps la possibilité de maîtrise du couple par l'unité 30 de contrôle de la transmission.

A cet effet, à l'issue de chaque étape ET6, l'algorithme ALG₃₆ compare la valeur du rang courant N à un rang d'exécution "TE1" déterminé, puis :
- si le rang courant N est inférieur au rang d'exécution "TE1" déterminé, le premier module 36 de calcul est amené à un état en amont de la transmission de la consigne de couple à l'unité de contrôle du moteur, c'est à dire entre les étapes ET2 et ET3. Cette configuration correspond à commander une boucle de plus de l'algorithme ALG₃₆,
- si le rang courant N est supérieur ou égal au rang d'exécution "TE₁" déterminé, le premier module 36 de calcul compare alors à nouveau le rang N à un rang "TS₂" déterminé de suspension de calcul, puis :

- si le rang courant N est inférieur au rang "TS₂" de suspension déterminé, le premier module 36 de calcul est amené à un état en aval de la transmission de la consigne de couple à l'unité de contrôle du moteur et en amont de l'incrémentation d'une unité du rang N, c'est à dire entre les étape ET3 et ET4. Cela signifie que la transmission et l'exécution de consigne du couple C_{M30} est suspendue jusqu'à ce que les conditions COND₄₄ qui conduisent à effectuer une boucle supplémentaire de l'algorithme ALG₃₆ soient à nouveau vérifiées,
- si le rang courant N est supérieur au rang "TS₂"de suspension déterminé, l'algorithme ALG₃₆ est initialisé à la valeur du premier rang et le premier module 38 de calcul est amené à un état en amont de la transmission de la consigne de couple à l'unité 22 de contrôle du moteur, c'est à dire entre les étapes ET2 et ET3. L'algorithme ALG₃₆ reprend son cycle en partant de la valeur initiale C_{M30(N=1)} de la consigne de couple.

On comprend que l'algorithme ALG₃₆ effectue des boucles successives tant que les conditions COND₄₀ et COND₄₂ d'activation de l'algorithme sont vérifiées.

On comprend aussi que l'unité 22 de contrôle du moteur et l'unité 30 de contrôle de la transmission peuvent faire partie d'une même unité de contrôle du groupe motopropulseur 10.

L'invention permet donc avantageusement de maintenir un véhicule en pente lorsqu'il quitte un mode de débrayage à l'arrêt, ce qui limite les risques d'accident avec un véhicule qui le suivrait de près.

## Revendications

1. Groupe motopropulseur (10) de véhicule automobile qui comporte au moins, d'amont en aval, un moteur thermique ou électrique (12) commandé, un convertisseur (20) de couple, un embrayage commandé (14) et une transmission (16) commandée qui est susceptible d'établir au moins un rapport de démultiplication pour transmettre un couple moteur à des roues (18) du véhicule, du type dans lequel le moteur (12) est commandé par l'intermédiaire d'une unité électronique (22) de contrôle du moteur (12), du type dans lequel la transmission (16) est commandée par l'intermédiaire d'une unité électronique (30) de contrôle de la transmission, et du type dans lequel les unités électroniques (22, 30) de contrôle du moteur et de contrôle de la transmission sont susceptibles d'échanger entre elles des informations et des consignes pour assurer le fonctionnement du groupe motopropulseur (10) suivant au moins un mode de roulage en réponse à au moins une information de couple (C_{M24}) demandé par le conducteur correspondant à une position (P₂₄) associée d'une pédale (24) d'accélérateur, en réponse à une information représentative de la position (P₃₂) d'une pédale de frein (32), et en réponse à une information (P₃₄) représentative de la position d'un organe (34) de sélection des rapports de transmission du véhicule,
**caractérisé en ce que** l'unité (30) de contrôle de la transmission est susceptible, en fonction de paramètres déterminés de fonctionnement du véhicule correspondant notamment à une configuration selon laquelle le véhicule évolue sur une chaussée en pente et quitte l'arrêt, d'établir un mode de maintien en pente dans lequel elle émet au moins une consigne (C_{M30}) de couple à l'intention de l'unité électronique (22) de contrôle du moteur (12) pour maintenir le véhicule immobile sur la chaussée sans que ses freins ne soient sollicités.

2. Groupe moto-propulseur (10) selon la revendication précédente, **caractérisé en ce que** l'unité (30) de contrôle de la transmission comporte un premier module (36) comportant un algorithme (ALG₃₆) de calcul qui est susceptible d'établir une consigne (C_{M30}) de couple à l'intention de l'unité (22) de contrôle du moteur (12), et un second module (38) de test qui est destiné à activer ou inactiver le lancement de l'algorithme (ALG₃₆) du premier module (36) et/ou l'exécution d'une consigne de couple (C_{M30}) calculée par cet algorithme (ALG₃₆).

3. Groupe moto-propulseur (10) selon la revendication précédente, **caractérisé en ce que** le second module (38) de test comporte au moins un premier sous-module (40) de test initial en mode de fin de débrayage à l'arrêt, et un deuxième sous-module (42) de test initial hors mode de fin de débrayage à l'arrêt qui sont susceptibles, indépendamment l'un de l'autre ou en combinaison, d'activer l'algorithme (ALG₃₆) de calcul du premier module (36) si des conditions déterminées (COND₄₀, COND₄₂) sont remplies, ou bien de déclencher un retour de l'unité (30) de contrôle de la transmission à son état initial (INIT₃₀) si les conditions déterminées ne sont pas remplies.

4. Groupe motopropulseur (10) selon la revendication précédente, **caractérisé en ce que** le premier sous-module (40) de test initial est susceptible d'activer le lancement de l'algorithme de calcul (ALG₃₆) du premier module (36) lorsque des premières conditions (COND₄₀) de fin de débrayage à l'arrêt sont vérifiées, notamment lorsque l'information (P₃₂) représentative de la position d'une pédale de frein (32) correspond au relâchement des freins.

5. Groupe motopropulseur (10) selon l'une des revendications 3 ou 4, **caractérisé en ce que** le deuxième sous-module (42) de test initial est susceptible d'activer le lancement de l'algorithme de calcul (ALG₃₆) du premier module (36) lorsque des deuxièmes conditions (COND₄₂) sont vérifiées simultanément, notamment lorsque :
- l'information (P₃₄) représentative de la position de l'organe (34) de sélection des rapports de transmission du véhicule correspond à des positions autres que des positions neutre (Neutral) ou de parking (Parking),
- l'information (P₃₂) représentative de la position d'une pédale (32) de frein correspond à un relâchement de la pédale,
- une information (V₄₈) représentative de la vitesse du véhicule est inférieure à une première vitesse de seuil (S₁) déterminée.

6. Groupe motopropulseur (10) selon l'une des revendications 3 à 5, **caractérisé en ce que** le second module (38) de test comporte au moins un troisième sous-module (44) de test courant qui est susceptible de désactiver l'exécution de la consigne de couple (C_{M30}) calculée par l'algorithme (ALG₃₆) de calcul du premier module (36), puis de déclencher le retour de l'unité (30) de contrôle de la transmission à son état initial (INIT₃₀).

7. Groupe motopropulseur (10) selon la revendication précédente prise en combinaison avec la revendication 3, **caractérisé en ce que** le troisième sous-module (44) de test est susceptible, à l'issue de l'exécution du calcul par l'algorithme (ALG₃₆), d'inhiber l'exécution de la consigne de couple (C_{M30}) calculée par l'algorithme (ALG₃₆) de calcul du premier module (36) lorsqu'au moins une parmi des troisièmes conditions (COND₄₄) d'inhibition est vérifiée, notamment lorsque :
- l'information de couple (C_{M24}) demandée par le conducteur est au moins égale à la consigne de couple (C_{M30}) calculée par l'algorithme (ALG₃₆) de calcul, ou
- l'information (V₄₈) représentative de la vitesse du véhicule est au moins égale à une deuxième vitesse de seuil (S₂) déterminée, ou
- l'information représentative de la position (P₃₂) d'une pédale (32) de frein correspond à un actionnement de la pédale.

8. Groupe motopropulseur (10) selon l'une quelconque des revendications 2 à 7, **caractérisé en ce que** l'algorithme (ALG₃₆) de calcul comporte une séquence de calcul par rangs (N) successifs dans laquelle, à partir d'une valeur initiale calibrée (C_{M30(N=1)}) de la consigne de couple (C_{M30}) associée à un premier rang, sont effectuées successivement :
- la transmission (TRANS{C_{M30}}) de la consigne de couple (C_{M30}) à l'unité (22) de contrôle du moteur, puis sa demande d'exécution (EXE{C_{M30}}),
- l'incrémentation d'une unité du rang (N),
- le calcul récurrent d'une nouvelle valeur de la consigne (C_{M30(N)}) de couple associée au rang (N) courant, déterminée en retranchant à la valeur de la consigne de couple (C_{M30(N-1)}) associée au rang précédent (N-1) une valeur de couple d'inertie (C_{I}) égale au produit d'un moment d'inertie (J₁₂) du moteur (12), de la dérivée (D_{ω12}) d'un régime ω12 de rotation du moteur 12 entre le rang courant (N) et le rang précédent (N-1), et d'un gain G déterminé.

9. Groupe motopropulseur (10) selon la revendication précédente, **caractérisé en ce que** le gain (G) déterminé est adapté aux caractéristiques du groupe moto-propulseur (10) du véhicule pour lequel l'algorithme (ALG₃₆) de calcul s'applique.

10. Groupe motopropulseur (10) selon l'une des revendications 8 ou 9, **caractérisé en ce que**, à l'issue du calcul de la nouvelle consigne (C_{M30}) de couple courant, le premier module (36) de calcul appelle le troisième sous-module (44) de test courant et **en ce que**, si aucune des troisièmes conditions (COND₄₄) d'inhibition n'est vérifiée, le troisième sous-module (44) de test courant n'inhibe pas l'exécution de la consigne de couple (C_{M30}) et compare la valeur du rang courant (N) à un rang d'exécution (TE₁) déterminé, puis :
- si le rang courant (N) est inférieur au rang d'exécution (TE₁) déterminé, le premier module de calcul est amené à un état en amont de la transmission de la consigne de couple (C_{M30}) à l'unité (22) de contrôle du moteur (12).
- si le rang courant (N) est supérieur ou égal au rang d'exécution (TE₁) déterminé, le premier module de calcul le compare à nouveau à un rang (TS₂) déterminé de suspension de calcul, puis :
. si le rang courant (N) est inférieur au rang (TS₂) de suspension déterminé, le premier module (36) de calcul est amené à un état en aval de la transmission de la consigne de couple à l'unité (22) de contrôle du moteur et en amont de l'incrémentation d'une unité du rang (N),
. si le rang courant (N) est supérieur au rang (TS₂) de suspension déterminé, il est à nouveau initialisé à la valeur du premier rang et le premier module (38) de calcul est amené à un état en amont de la transmission de la consigne (C_{M30}) de couple à l'unité (22) de contrôle du moteur (12).

11. Groupe motopropulseur (10) selon l'une quelconque des revendications précédentes, **caractérisé en ce que** l'unité (22) de contrôle du moteur comporte un dispositif d'arbitrage (28) entre l'information de couple (C_{M24}) demandé par le conducteur et la consigne de couple (C_{M30}) émise par l'unité (30) de contrôle de la transmission.

12. Groupe motopropulseur (10) selon l'une quelconque des revendications précédentes, **caractérisé en ce que** l'unité (22) de contrôle du moteur (12) et l'unité de contrôle (30) de la transmission font partie d'une même unité de contrôle du groupe motopropulseur.
